# EUROPEAN PATENT APPLICATION

(11) **EP 2 343 494 A1**
(43) Date of publication of application: **13.07.2011**
(21) Application number: 10016038.1
(22) Date of filing: 23.12.2010
(51) Int. Cl.: G01B 9/02, G01B 11/26

(54) **Angle measuring interferometer**

(30) Priority: 30.12.2009 US 650322
(71) Applicant: Mitsubishi Electric Corporation, Tokyo 100-8310 (JP)
(72) Inventor: Yerazunis, William S., Acton, MA 01720 (US); Waters, Richard C., Concord, MA 01742 (US)
(74) Representative: Pfenning, Meinig & Partner GbR

(57) **Abstract**

An angular displacement of an object is measured interferometrically by splitting a laser beam into a reference beam and a measuring beam. The reference beam is directed at a stationary reference retroreflector and then a phase shift detector. The measuring beam is directed at a rotatable reflective surface of the object and then a stationary measuring retroreflector and then back to the rotatable reflective surface and then to the phase shift detector such that the phase shift detector measures an angular displacement of the rotatable reflective surface when the length of the path of the measuring beam changes when the rotatable reflective surface is displaced.

## Description

### Field of the Invention

This invention relates generally to interferometers, and more particularly to a rotary interferometer that measure angular displacements of objects.

### Background of the Invention

The interferometer was well-known at the end of the 19^{th} century, nominally invented by A. A. Michelson in 1881. Michelson's interferometer design was instrumental in the disproof of the existence of "luminiferous aether," for which Michelson won the Nobel Prize in physics in 1907. With the invention of the continuous-wave HeNe laser in 1960 by Ali Javan, William Bennet Jr, and Donald Herriot of Bell Labs, the Michelson interferometer has become a principal apparatus and method for accurately measuring displacements of objects over a large range of values.

**Linear interferometer**

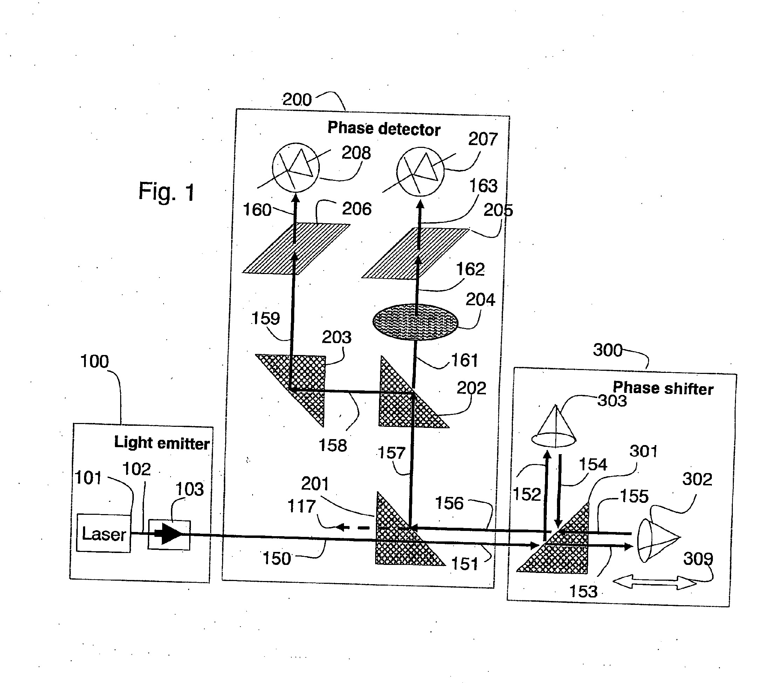

Figure 1 shows a conventional linear interferometer based on the Michelson design. A light emitter 100 includes a laser 101 for emitting a coherent laser beam 102. The beam passes through Faraday isolator 103 to prevent unwanted feedback into the optical oscillator of the laser cavity.

An emitted light beam 150 is polarized at an angle of 45 degrees from the plane of the Figure. The beam proceeds into a phase detector 200, passes unaltered through a beamsplitting prism 201, and emerges from the detector 200 as laser beam 151.

Then, the beam enters a phase shifter 300, where the 45-degree-polarized beam 151 is split into two sub-beams 152 and 153 by a polarizing beamsplitter 301. A vertically polarized laser beam 152 emerges from the polarizing beamsplitter 301 and is reflected from a stationary reference retroreflector 303. Concurrently, a horizontally polarized component of the beam emerges from polarizing beamsplitter 301 as a laser beam 153 and proceeds horizontally to be reflected by a linearly displaceable retroreflector 302.

Thus, the beam splitting essentially produces two beams. A first beam 152 is used as a reference beam, and a second beam 153 is used as a measuring beam. The relative lengths of the paths traveled by the reference beam and the measuring beams change when the displaceable measuring retroreflector 302 is displaced from an initial orientation as described below to induce a detectable phase shift between the beams.

It is a property of retroreflectors that any light beam entering the base of the retroreflector exits the retroreflector along a precisely parallel path to the entering beam, but displaced laterally. The exit point, and hence, the amount of lateral displacement of the beam, is at the same radial distance on the circular retroreflector face as the entry point, but rotated by 180 degrees. Effectively the retroreflector takes any incoming light pattern, rotates it circularly 180 degrees, and returns the beam in exactly same the direction as the entering beam.

After exiting the retroreflector 303, a vertically polarized beam 154 returns to the polarizing beamsplitter 301 where the beam is reflected again and returns to detector 200 as part of a beam 156.

Concurrently, after exiting from the linearly displaceable retroreflector 302, a horizontally polarized beam 155 proceeds back through the polarizing beamsplitter 301 and recombines with the vertically polarized beam from retroreflector 303 to form a compositely polarized beam 156.

Because the retroreflector 302 can be displaced 309 horizontally, the distance that the measuring beam must traverse, with respect to the reference beam, can change. Therefore, the beam 155 returning from retroreflector 302 can have an additional phase delay with respect to the beam 154 from retroreference reflector 303. It is this change in the phase delay that enables the distance measurements.

At the polarizing beamsplitter 301, the two beams 154-155 combine to have the same optical path. Because the beams 154-155 have orthogonal polarizations with respect to each other, i.e., vertical versus horizontal, the beams do not interact. The combined beam 156 then passes back into the detector 200 and into the beamsplitter 201 where the beam is reflected to a beamsplitter 202. The non-reflected beam 117 from beamsplitter 201 is not used.

The reflected beam 158 from the beamsplitter 202 is reflected fully by a reflective prism 203 as beam 159, and the reflected beam passes through a 45 degree polarizer 206 to become beam 160. Because the polarizer collapses the wave function of the traversing beam, the photons of the beam are no longer either vertically or horizontally polarized, but rather all of the photons are now at a 45 degree polarization angle.

Because the beams now share the same polarization, beam 160 exhibits interference effects, also known as "interference fringes," manifested as a sinusoidal brightening and dimming of the beam as the retroreflector 302 moves to change the path length. A photodiode 208 converts the energy of the beam 160 into an electrical signal, which can be amplified and measured as a linear displacement.

The non-reflected beam 161 exiting the beamsplitter 202 passes through a quarter-wave plate 204. The quarter-wave plate contains an anisotropic optical material such as mica or stressed polystyrene that exhibits a varying index of refraction with varying polarization. In particular, a perfect quarter-wave plate designed for a particular wavelength λ will have a minimum (ideally zero) phase delay at one polarization rotation of the plate with respect to the beam, and a maximum (ideally, exactly λ/4) phase delay when the beam is polarized perpendicularly to the zero phase delay orientation.

The quarter-wave plate 204 delays one of the polarizations by λ/4, which is a 90 degree phase shift forming beam 162. The beam 162 then passes through a 45 degree polarizer 205, which similar to the polarizer 206, collapses the polarization of the beam to 45 degrees to form beam 163. The component parts of beam 163 now share the same polarization, and as such, exhibit interference fringes. These fringes are detected by photodiode 207 to generate a second electrical signal.

The two electrical signals from photodiodes 207 and 208 are sinusoids with a relative phase angle of 90 degrees, generated by the quarter-wave plate 204. These two sinusoids can be thresholded at their average values. The resulting pulse trains are used as quadrature signals to a quadrature counter, not shown, to effectively measure the linear displacement 309 when the retroreflector 302 is moved.

**Rotary Interferometer**

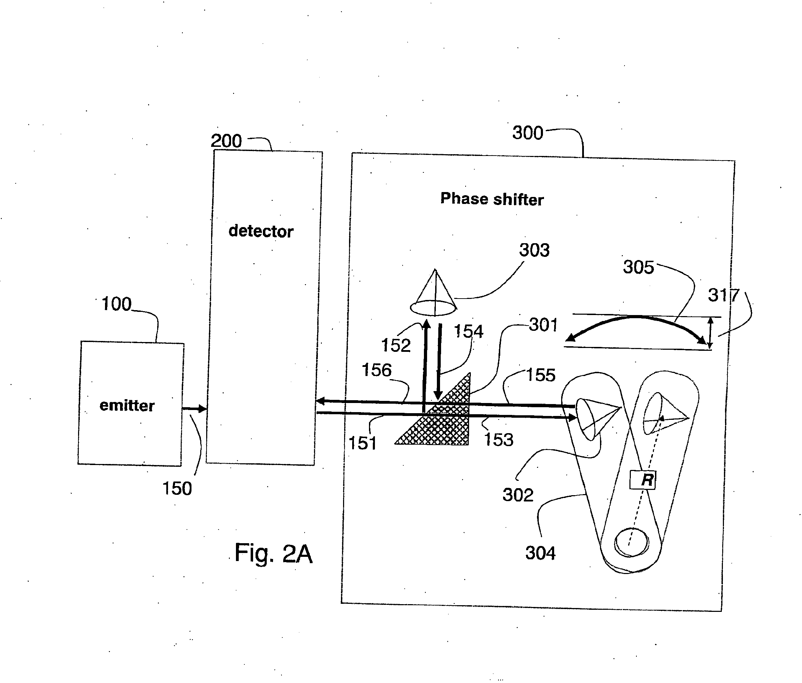

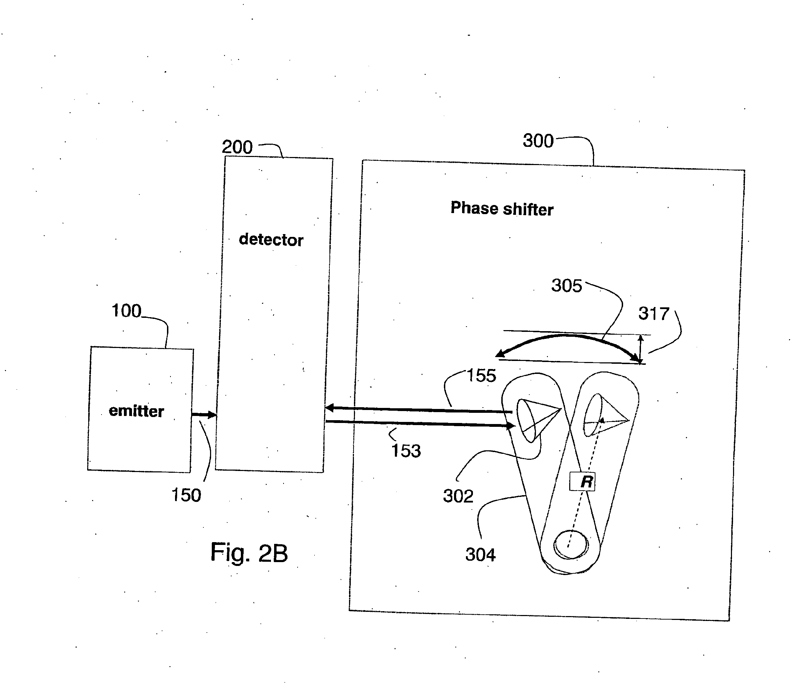

Figures 2A-2B shows a conventional, prior art rotary interferometer that uses rotational displacement rather than linear displacement. Figure 2A is detailed, and Figure 2B summarizes the essential optical features.

The emitter 100, detector 200, and the laser beams 150 through 162 are the same as in Figure 1.

The phase shifter 300 has a rotatable measuring retroreflector 302 on the rotationally moving linkage 304. As the linkage 304 rotates through a displacement along an arc 305, the measuring retroreflector 302 moves with the linkage and produces a phase difference in the laser beam 153 yielding beam 155, as shown in Figure 1, but now to measure the angular displacement.

However, this conventional arrangement has several problems.

**Mass and Angular Inertia**

First, the rotatable measuring retroreflector 302 and the linkage have a significant mass. For lightweight, fast-moving mechanisms, such as laser beam director mirrors mounted on optical galvanometers, the weight of the retroreflector can be greater than the mass of all the other optical components. The additional mass considerably disturbs the dynamics of the system, and also decreases the maximum slewing speed of the laser beam director.

**Range**

Second, the angular displacement 305 that the system can operate over is limited because the rotatable retroreflector returns the beam on a parallel path with a displaced axis. If the height 317 of the arc 305 is greater than the diameter of the laser beam 156, then no laser beam is returned to the detector 200, and measurement of the angular displacement 305 becomes impossible.

It is desired to reduce the weight and increase the angular range of a rotary interferometer.

### Summary of the Invention

The embodiments of the invention provide a rotary interferometer to measure angular displacements to rotatable objects.

In contrast with the prior art, this interferometer significantly reduces the weight and angular inertia of the rotary interferometer.

In addition, the interferometer has a substantially larger range of angular displacements than conventional interferometers.

Instead of using the rotatable retroreflector and linkage, the embodiments use a polished flat reflective surface on a rotatable object for which the angular displacement needs to be measured. The surface can also be a small planar mirror arranged on a surface of the object, if the object is not reflective.

A stationary corner reflector is used to produce fringes at a rate proportional to a tangent of an angle of the measured rotatable object.

### Brief Description of the Drawings

Figure 1 is a schematic of a prior art linear interferometer;

Figures 2A-2B are schematics of a prior art rotary interferometer;

Figures 3A-3D are schematics of a rotary interferometer according to embodiments of the invention;

Figure 4 is a top view schematic of the interferometer of Figure 3D; and

Figure 5 is an isometric view schematic of the interferometer of Figure 3D.

### Detailed Description of the Preferred Embodiments

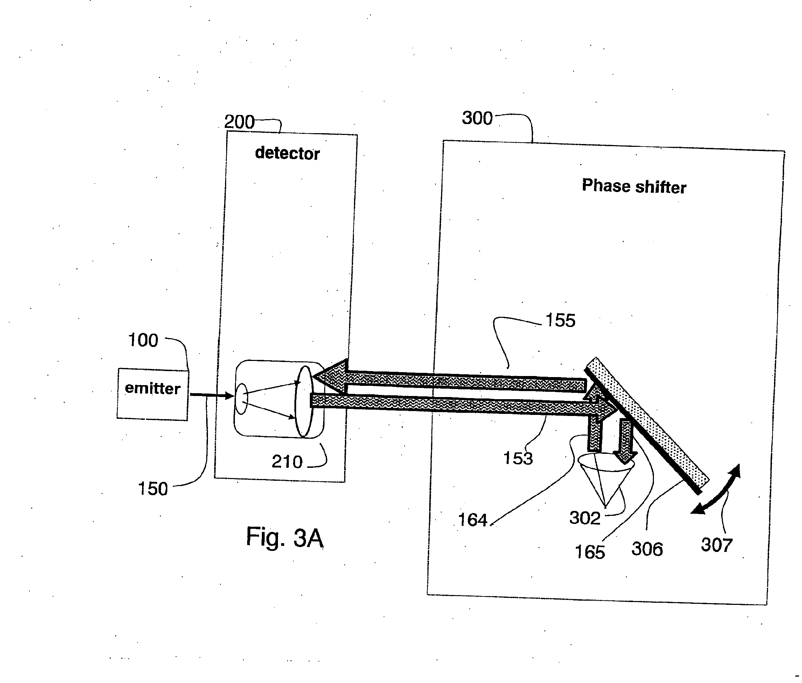

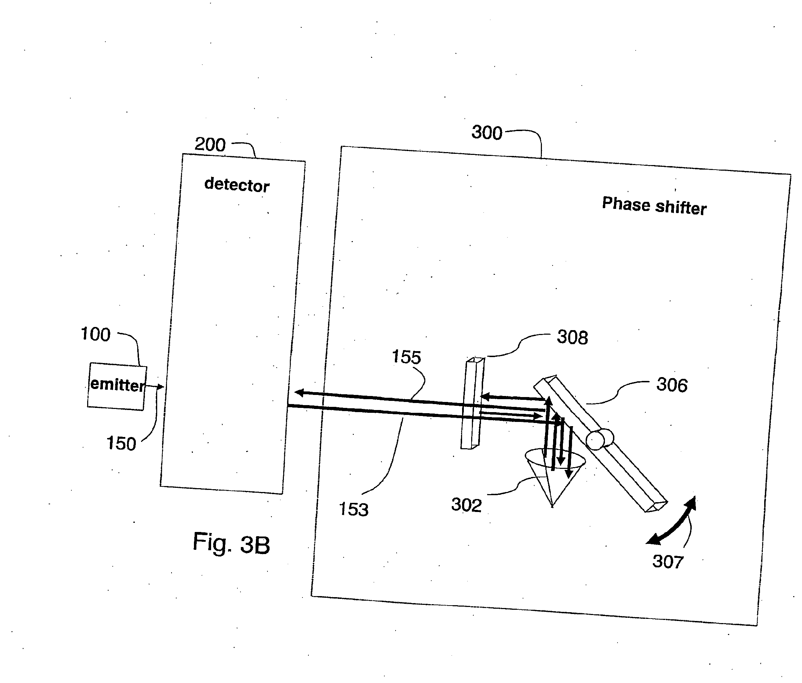

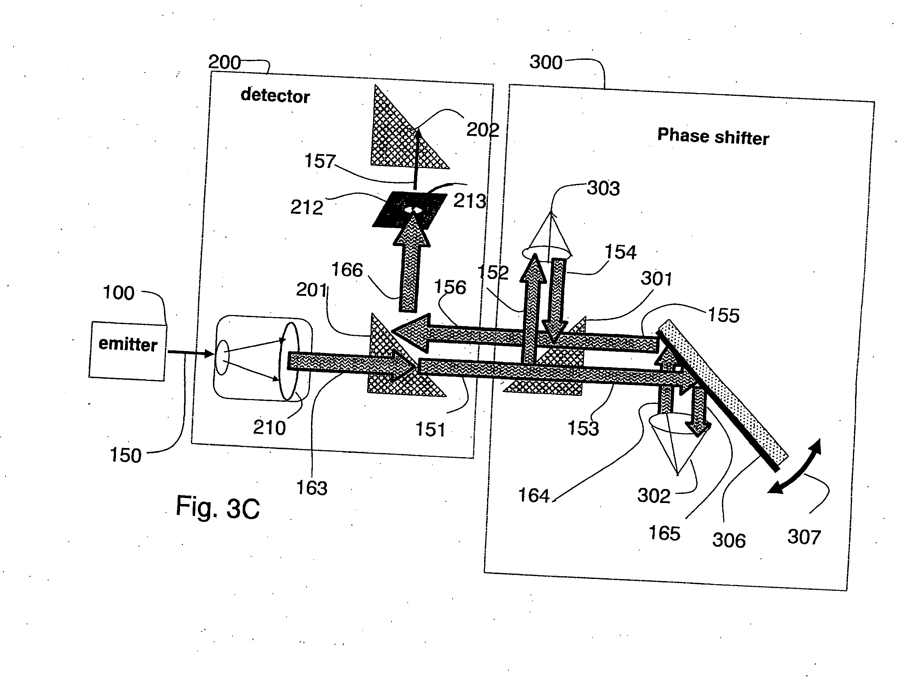

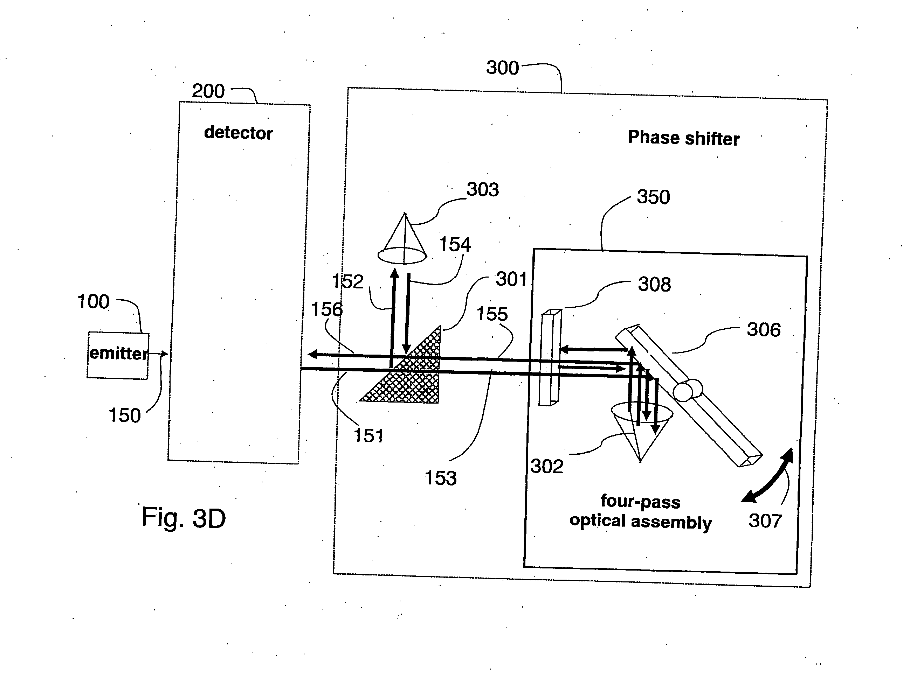

Figures 3A-3D show rotary interferometers according to embodiments of our invention. Figures 3A and 3B summarize the essential basic details of the interferometers shown in Figures 3C and 3D. The emitter 100 is as shown in Figures 1-2.

**Beam Expander**

The phase detector 200 has an optional laser beam expander 210 in Figure 3C. The expander increases the diameter of the beam to result in a wider coherent laser beam 163. By expanding the beam, a range over which angular displacements can be measured is increased, as described below. The beam expander can be a Galilean telescope with one negative lens and one positive lens, or a Keplerian telescope with a pair of positive lenses. The expanded beam 163 continues as an expanded beam 151 through the first beamsplitter 201.

**Rotatable Reflective Surface**

We do not use the heavyweight rotating measuring retroreflector 302 arranged on the linkage 304, as in the prior art. Instead, we use a rotatable reflective surface 306 that is inserted in the path of the enlarged beam 153 diverting the enlarged beam 153 as an enlarged beam 165 to a *stationary* measuring retroreflector 302. The reflective surface can be a polished surface of the object to which the angular displacement is to be measured. If the surface is not reflective, a mirror can be arranged on the surface.

As defined herein, a *rotatable* surface is configured to move an *angular displacement* 307 along an *arc.*

The retroreflector 302 returns the enlarged beam 165 as an enlarged beam 164 to the rotatable reflective surface 306. The reflective surface 306 reflects the enlarged beam 164 back along the same path as enlarged beam 155.

The enlarged beams 154 and 155 merge with crossed polarizations into enlarged beam 156. The enlarged beam 156 reflects from beamsplitter 201 becoming enlarged beam 166.

If the beam expander 210 is used, then the enlarged beam 166 passes through a hole 213 in an optional aperture plate 212 to a reduced diameter beam 157. The aperture plate reduces the beam to its original diameter before entering the beam expander. The beam 157 propagates through the remainder of the phase detector 200 as described for Figure 1 to measure the angular displacement.

Because the diameter of the beams used for detecting is increased by the beam expander 210, the reflective surface mirror 306 can rotate through a larger angle before the returned sensing enlarged beam 155, fails to overlap. As a result, the angle that can be measured is much larger than in the prior art.

In addition, the reflective surface 306 can be a polished, aluminized, silvered, or otherwise mirrored part of the object to which the angular displacement needs to be measured, and hence, does not increase the overall mass or angular inertia of the object.

In a preferred implementation, where the invention is used to measure a position of a beam directing optical galvanometer, the mirror 306 is the same mirror as the final beam directing mirror, and so the total mass or angular inertia remains exactly the same as for the beam directing optical galvanometer that does not have the ability to measure rotation interferometrically.

**Four-Pass Optical Assembly**

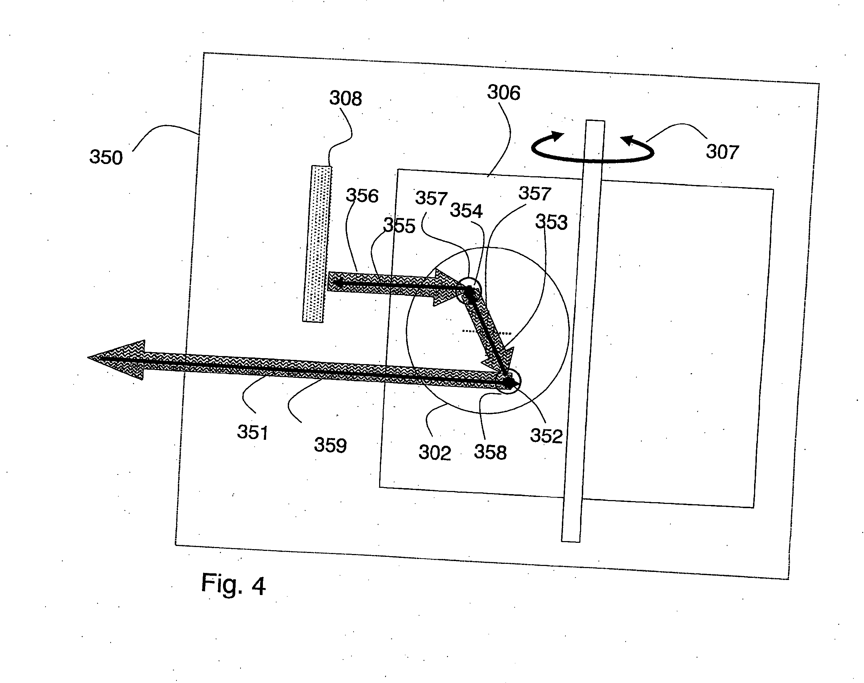

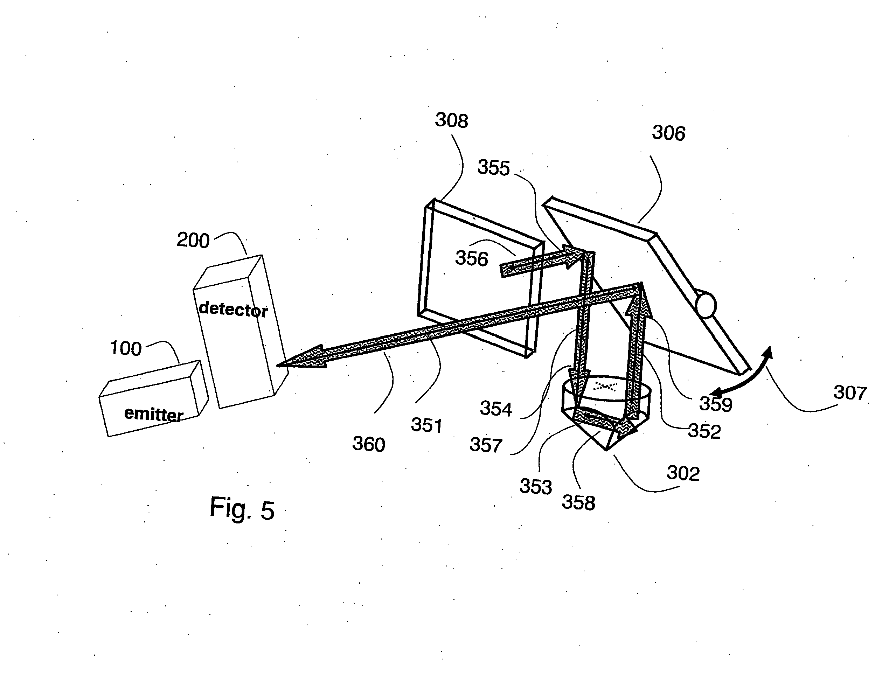

Figure 3D shows an alternative embodiment of our invention. The emitter 100 and the phase detector 200 are as described above for Figures 2A and 2B. However, the phase shifter 300 is altered by using a four-pass optical assembly 350, shown in abbreviated form in Figure 4, and in detail in Figure 5.

As shown in Figure 3D, the beam pattern within the four-pass optical assembly 350 uses the rotatable reflective surface 306, the stationary retroreflector 302, and a planar stationary mirror 308 to produce a return beam 155 that does not deviate significantly in position through large angular displacements 307 of the rotatable reflective surface 306

Figures 4 and 5 show the details of the four pass optical assembly 350. Figure 4 shows a top view of the four pass optical assembly 350. Figure 5 shows an isometric view of the four pass optical assembly 350. The following description applies to Figure 4.

The beam 153 from polarizing beamsplitter 301 enters the four-pass optical assembly 350 parallel to the plane of the Figure, and is denoted as beam 351. Beam 351 reflects downward from rotating mirror 306 as beam 352, shown end-on in Figure 4.

Beam 352 enters the retroreflector 302, and is reflected internally as beam 353, reflecting out of the retroreflector as beam 354, shown end-on in figure 4. Note that the displacement of beam 352 with respect to the center of retroreflector 302 causes an equal and opposite displacement of beam 354 from the center of retroreflector 302.

The beam 354 emerges from the retroreflector 302, and reflects from the rotatable reflective surface 306 to form beam 355. Beam 355 reflects from the stationary planar mirror 308 to form beam 356. Because of the parallel reflection action of retroreflector 302, beam 355 is always perpendicular to the stationary planar mirror 308. The reflected beam 356 is always coaxial with incoming beam 355, and beam 356 re-traces the route of beam 355 in reverse.

Beam 356 reflects from the rotatable reflective surface 306 to form beam 357, again re-tracing the route of beam 354 in reverse. Beam 357 enters the stationary retroreflector 302 and reflects internally, to form beam 358, again, re-tracing the route of beam 353 in reverse. Beam 353 reflects internally in the retroreflector 302, and forms beam 359, again, re-tracing the route of beam 352 in reverse. Beam 359 emerges from the retroreflector 302 and reflects from rotating mirror 306, yielding beam 360, and again re-tracing the route of beam 351 in reverse.

Then, beam 360 emerges from the four pass optical assembly 350 and becomes beam 155 as shown in Figure 3D. The beam 155 is combined with a reference beam 154 as shown in Figure 3D to form a combined beam 156 that is then phase-detected by the phase detector 200 as described above for Figure 1 to measure the angular displacement.

With the arrangement as shown in Figure 4 and 5, the overall beam maintains alignment over a very large angular displacement 307 of the rotatable reflective surface 306.

Furthermore, because the beam makes four traverses of a displacement that varies with the position of the rotatable reflective surface 306, specifically, beam paths 351, 355, 356, and 360, rather than two traverses of path as described above, there specifically beam paths 153 and 155, the sensitivity of the embodiments as described for Figures 4 and 5 is twice that of the prior art or of the embodiment of Figure 3A and 3C.

Although the invention has been described by way of examples of preferred embodiments, it is to be understood that various other adaptations and modifications can be made within the spirit and scope of the invention. Therefore, it is the object of the appended claims to cover all such variations and modifications as come within the true spirit and scope of the invention.

## Claims

1. An apparatus for measuring an angular displacement of an object interferometrically, comprising:
means (100) for generating a laser beam; and
means (301) for splitting the laser beam into a reference beam and a measuring beam, wherein the reference beam is directed at a stationary reference retroreflector (303) and then a phase shift detector (200), and wherein the measuring beam is directed at a rotatable reflective surface (306) of the object and then a stationary measuring retroreflector (302) and then back to the rotatable reflective surface (306) and then to the phase shift detector (200) such that the phase shift detector measures an angular displacement of the rotatable reflective surface when a length of a path of the measuring beam changes when the rotatable reflective surface is displaced.

2. The apparatus of claim 1, further comprising:
a beam expander (210) placed in a path of the laser beam.

3. The apparatus of claim 2, wherein the beam expander (210) is a Gallean telescope with one negative lens and one positive lens.

4. The apparatus of claim 2, wherein the beam expander (210) is a Keplerian telescope with a pair of positive lenses.

5. The apparatus of claim 1, wherein the rotatable reflective surface (306) is a polished surface of the object.

6. The apparatus of claim 1, wherein the rotatable reflective surface (306) is a mirror arranged on a surface of the object.

7. The apparatus of claim 1, wherein the displacement is angular along an arc.

8. The apparatus of claim 2, wherein the phase shift detector (200) further comprises:
an aperture plate (212) placed in the path of the measuring beam.

9. The apparatus of claim 1, further comprising:
an optical assembly (210, 350) placed in the path of the measuring beam to increase a difference in phase shift between the reference beam and the measuring beam.

10. The apparatus of claim 1, further comprising:
a multiple reflection optical assembly (350) placed in the path of the measuring beam to increase a range of angles that can be measured.

11. The apparatus of claim 1, further comprising:
a multiple reflection optical assembly (350) placed in the path of the measuring beam to increase a difference in phase shift between the reference beam and the measuring beam due to a given change in angle of the rotatable reflective surface.

12. An apparatus for measuring an angular displacement of an object interferometrically, comprising:
means (100) for generating a laser beam; and
means (301) for splitting the laser beam into a reference beam and a measuring beam, wherein the reference beam is directed at a stationary reference retroreflector (303) and then a phase shift detector (200), and wherein the measuring beam is directed at a rotatable reflective surface (306) of the object and then a stationary measuring retroreflector (302) and then back to the rotatable reflective surface (306) and then to a stationary planar reflecting surface (308) and then back to the rotatable reflective surface (306) and then back to the stationary measuring retroreflector (302) and then back to the rotatable reflective surface (306) and then to the phase shift detector (200) such that the phase shift detector measures an angular displacement of the rotatable reflective surface when a length of a path of the measuring beam changes when the rotatable reflective surface is displaced.

13. A method for measuring an angular displacement of an object interferometrically, comprising the steps of:
generating a laser beam; (100)
directing the laser beam at a beam splitter to produce a reference beam and a measuring beam; (301)
directing the reference beam at a stationary reference retroreflector and then a phase shift detector; (303) and
directing the measuring beam at a rotatable reflective surface of the object and then a stationary measuring retroreflector and then back to the rotatable reflective surface and then to the phase shift detector such that the phase shift detector measures an angular displacement of the rotatable reflective surface when the length of the path of the measuring beam changes when the rotatable reflective surface is displaced (306, 302, 200).

14. A method for measuring an angular displacement of an object interferometrically, comprising the steps of:
generating a laser beam; (100)
directing the laser beam at a beam splitter to produce a reference beam and a measuring beam; (301)
directing the reference beam at a stationary reference retroreflector and then a phase shift detector; (303) and
directing the measuring beam at a rotatable reflective surface of the object and then a stationary measuring retroreflector and then back to the rotatable reflective surface and then to a stationary measuring planar reflector and then back to the rotatable reflective surface and then back to the stationary measuring retroreflector and then back to the rotatable reflective surface and then to the phase shift detector such that the phase shift detector measures an angular displacement of the rotatable reflective surface when the length of the path of the measuring beam changes when the rotatable reflective surface is displaced (306, 302, 308,200).
